# EUROPÄISCHE PATENTANMELDUNG

(11) **EP 1 219 865 A1**
(43) Veröffentlichungstag der Anmeldung: **03.07.2002**
(21) Anmeldenummer: 00128710.1
(22) Anmeldetag: 29.12.2000
(51) Int. Cl.: F16H 48/08

(54) **Ausgleichsgetriebeeinheit und Verfahren zu deren Herstellung**

(71) Anmelder: Johann Hay GmbH & Co. KG, Automobiltechnik, 55566 Bad Sobernheim (DE)
(72) Erfinder:
(74) Vertreter: Grünecker, Kinkeldey, Stockmair & Schwanhäusser Anwaltssozietät

(57) **Zusammenfassung**

Es betrifft eine Ausgleichsgetriebeeinheit mit einem Achsantriebsrad (2), das eine Verzahnung aufweist, und einem Differentialgehäuse (2,4) zur Aufnahme von Ausgleichszahnrädern eines Differentials. Problem zugrunde, eine Ausgleichsgetriebeeinheit der eingangs genannten Art anzugeben. Das Achsantriebsrad (2) und zumindest einen Teil des Differentialgehäuses sind einstückig, vorzugsweise mittels Gesenkschmieden ausgebildet. Alternativ wird vorgeschlagen, eine induktiv gehärtete Verzahnung an dem Achsantriebsrad (2) vorzusehen, so dass auf einen Nachbearbeitungsschritt der gehärteten Verzahnung verzichtet werden kann.

Dementsprechend wird bei dem Verfahren zur Herstellung der Ausgleichsgetreibeeinheit zunächst das Achsantriebsrad (2) und zumindest ein Teil des Differentialgehäuses (2,4) mittels Umformen eines Achsantreibsradrohlings hergestellt. Bei einer alternativen verfahrensmäßigen Lösung wird, die an dem Achsantreibsrad (2) vorgesehene Verzahnung induktiv gehärtet.

## Beschreibung

Die vorliegende Erfindung betrifft eine Ausgleichsgetriebeeinheit mit einem Achsantriebsrad, das eine Verzahnung aufweist, und einem Differentialgehäuse zur Aufnahme von Ausgleichszahnrädern eines Differentials. Darüber hinaus betrifft die vorliegende Erfindung ein Verfahren zur Herstellung einer derartigen Ausgleichsgetriebeeinheit.

Die gattungsbildende Ausgleichsgetriebeeinheit weist ein Achsantriebsrad auf, welches mit einer Verzahnung versehen ist. Diese Verzahnung wirkt mit einer mit der Getriebeeinheit eines Motors (vorzugsweise eines KFZ) verbundenen Welle zusammen. Im Stand der Technik ist es bekannt, derartige Ausgleichsgetriebeeinheiten herzustellen, indem das Differentialgehäuse als Ganzes gegossen und nachfolgend einer spanhebenden Bearbeitung unterzogen wird, um Lagersitze und Bohrungen beispielsweise zur Aufnahme von Kegelradbolzen der Ausgleichszahnräder auszubilden. Ein geschmiedetes und ein überdrehtes Achsantriebsrad, das eine einsatzgerhärtete Verzahnung aufweist, wird mit dem derart hergestellten Gehäuse verbunden. Hierzu weist das Gehäuse an seinem einen Ende einen Flansch auf, an dem das Achsantriebsrad montiert wird. Um das Achsantriebsrad einerseits und das Differentialgehäuse andererseits konzentrisch montieren zu können, wird an dem Achsantriebsrad ein Zentriersitz passgenau zur Aufnahme des an dem Differentialgehäuse ausgebildeten Flansches vorgesehen. Auch das spätere Verbinden des Differentialgehäuses und des Achsantriebsrades ist aufwendig und nachteilig. Darüber hinaus besteht insbesondere in der Automobiltechnik derzeit zur Reduzierung des Flottenverbrauches die Neigung, sämtliche Teile hinsichtlich des Gewichtes zu überprüfen.

Der vorliegenden Erfindung liegt das Problem zugrunde, eine Ausgleichsgetriebeeinheit der eingangs genannten Art derart weiterzubilden, dass sie sich einfacher und kostengünstiger herstellen lässt. Darüber liegt der vorliegenden Erfindung das Problem zugrunde, ein Verfahren zur Herstellung der Ausgleichsgetriebeeinheit anzugeben.

Zur Lösung des obigen Problems wird gemäß einem ersten Aspekt der vorliegenden Erfindung vorgeschlagen, das Achsantriebsrad einteilig zumindest mit einem Teil des Differentialgehäuses auszubilden.

In Abkehr von dem vorbekannten Stand der Technik wird bei der vorliegenden Erfindung das Achsantriebsrad einteilig zumindest mit einem Teil des Differentialgehäuses ausgebildet. Auch kann das Differentialgehäuse insgesamt einteilig mit dem Achsantriebsrad ausgebildet werden. Auf eine separate, verhältnismäßig aufwendig zu verwirklichende und relativ schwere Verbindung zwischen dem Achsantriebsrad und dem Gehäuse kann erfindungsgemäß verzichtet werden. Die erfindungsgemäße Ausgleichsgetriebeeinheit ist damit gegenüber dem Stand der Technik leichter und lässt sich kostengünstiger herstellen.

Zur Lösung des obigen Problems wird gemäß einem zweiten vorrichtungsmäßigen Aspekt vorgeschlagen, an dem Achsantriebsrad der Ausgleichsgetriebeeinheit eine induktiv gehärtete Verzahnung vorzusehen.

Es hat sich überraschenderweise herausgestellt, dass bei einer induktiv gehärteten Verzahnung insbesondere bei der Durchführung eines zwei- oder mehrstufigen Induktionshärteverfahrens auf eine Nachbearbeitung der gehärteten Zähne verzichtet werden kann. Durch die induktionsgehärtete Verzahnung ist eine höhere Maßhaltigkeit zu erreichen, wodurch ganz oder teilweise auf nachgeordnete Bearbeitungsschritte verzichtet werden kann.

Im Hinblick auf die Festigkeit der Ausgleichsgetriebeeinheit und zur fertigungstechnischen Optimierung ist es zu bevorzugen, das einteilig mit dem Achsantriebsrad ausgebildete Teil des Differentialgehäuses zumindest soweit auszubilden, dass Bohrungen zur Aufnahme von Bolzen für die Ausgleichsräder des Differentialgetriebes in dem einteilig mit dem Achsantriebsrad verbundenen Gehäuseteil vorgesehen sind. Bei einer derartigen bevorzugten Ausgestaltung geht das Achsantriebsrad kontinuierlich in den die Bohrungen für die Aufnahme der Bolzen aufweisenden Teil des Differentialgehäuses über, so dass die Ausgleichsgetriebeeinheit im Gegensatz zu den vorbekannten Vorrichtungen dünnwandiger und damit leichter ausgebildet werden kann. Eine Diskontinuität zwischen dem Achsantriebsrad und den beanspruchten, die Bohrung für die Bolzen aufweisenden Teile des Differentialgehäuses fehlt bei dieser bevorzugten Ausgestaltung.

Durch die Substitution von Gussmaterial durch schmiedbare Werkstoffe können die mechanischen Eigenschaften bei Reduzierung des Gewichtes verbessert, zumindest jedoch beibehalten werden.

Zur weiteren Verbesserung der mechanischen Eigenschaften und zur Vereinfachung des Herstellungsprozesses der erfindungsgemäßen Ausgleichsgetriebeeinheit wird mit einer bevorzugten Ausgestaltung der vorliegenden Erfindung vorgeschlagen, das Achsantriebsrad und das Teil des Differentialgehäuses mittels Schmieden, insbesondere Gesenkschmieden herzustellen. Diese bevorzugte Ausgestaltung schließt die Möglichkeit ein, nicht nur einen Teil des Differentialgehäuses, sondern das Differentialgehäuse insgesamt und einteilig mit dem Achsantriebsrad zu schmieden. Eine derartige Ausgestaltung stellt jedoch erheblich Anforderungen an die Schmiedetechnik. Die Schmiedevorrichtung und die Handhabung des Bauteils zur schmiedetechnischen Herstellung des gesamten Gehäuses sind aufwendig.

Dementsprechend wird gemäß einer weiteren bevorzugten Ausgestaltung der vorliegenden Erfindung vorgeschlagen, ein zweites Differentialgehäuseteil vorzusehen, welches zur Vervollständigung des die Ausgleichszahnräder aufweisenden Differentialgehäuseteils mit diesem verbunden ist.

In Abkehr von der aus dem Stand der Technik bekannten Schraub- bzw. Nietverbindung zwischen dem Achsantriebsrad und dem Differentialgehäuse wird gemäß einer weiteren bevorzugten Ausgestaltung der vorliegenden Erfindung vorgeschlagen, zwischen dem ersten und dem zweiten Differentialgehäuseteil eine Schweißverbindung vorzusehen. Es hat sich gezeigt, dass beide Differentialgehäuseteile über eine Schweißverbindung gewichtssparend jedoch zuverlässig selbst dann miteinander verbunden werden können, wenn das Achsantriebsrad zusammen mit dem ersten Differentialgehäuseteil aus einem induktivhärtbaren Stahl und das zweite Differentialgehäuseteil aus einem schweißbaren Stahl hergestellt sind.

Das erste Differentialgehäuseteil weist zumindest zwei sich im Wesentlichen axial zu dem Achsantriebsrad erstreckende Gehäusestege auf, die mit dazu korrespondierend ausgebildeten Gehäusestegen des zweiten Differentialgehäuseteils verschweißt werden. Diese Gehäusestege können verhältnismäßig schmal ähnlich wie Kühlrippen ausgebildet werden, was zu einem geringen Wärmeeintrag durch Wärmeleitung von der Schweißstelle in das endkonturnah geschmiedete Achsantriebsrad führt.

Die konstruktive Vorbereitung der Schweißverbindung wird insbesondere dadurch erzielt, dass endseitig an den Gehäusestegen Konturen ausgebildet werden, die aneinandergesetzt eine Vertiefung für die Aufnahme der beim Schweißen gebildeten Schmelze bilden. Bei einer derartigen Ausgestaltung liegen die miteinander zu verschweißenden Stege vollflächig aneinander.

Die vorstehend beschriebene endseitige Kontur der Gehäusestege des ersten und des zweiten Differentialgehäuseteils werden bei einer bevorzugten Ausgestaltung gleichfalls mittels Gesenkschmiedens hergestellt, wodurch die Anzahl der nachfolgend erforderlichen Fertigungsschritte weiter reduziert wird. Die endseitige Kontur der Gehäusestege wird vorzugsweise beim Gesenkschmieden des Achsantriebsrades zusammen mit dem ersten Gehäuseteil einerseits und beim Gesenkschmieden des zweiten Gehäuseteils andererseits ausgeformt.

Zur Erhöhung der Verschleißfestigkeit der erfindungsgemäßen Ausgleichsgetriebeeinheit wird die an dem Achsantriebsrad vorgesehene Verzahnung vorzugsweise gehärtet und zwar im Hinblick auf einen möglichst geringen Verzug und eine geringe Veränderung der durch Schmieden und nachfolgende spanhebende Bearbeitung ausgebildeten Zähne mittels Induktionshärten. Bei einer derartigen Ausgestaltung ergibt sich insbesondere ein kombinatorischer Effekt zwischen der Ausbildung des Achsantriebsrades mit dem zumindest ersten Differentialgehäuseteil und dem Härten. Wenngleich die Verzahnung an dem Achsantriebsrad konventionell mittels Fräsen, d.h. spanhebend hergestellt wird, kann bei nachfolgendendem Schaben und Induktivhärten, insbesondere Mehrfrequenz-Induktivhärten auf ein nachfolgendes Schleifen verzichtet werden. Das Achsantriebsrad und das erste Gehäuseteil lassen sich somit durch Gesenkschmieden und spanhebende Bearbeitung mit nachfolgendem Induktivhärten herstellen. Auf eine Nachbearbeitung der spanhebend bearbeiteten Verzahnung kann aufgrund des geringen Verzuges beim Induktivhärten weitgehend oder vollständig verzichtet werden.

Ein Wärmeeintrag in das einteilig an dem Achsantriebsrad ausgebildete Gehäuseteil kann vorzugsweise dadurch wirkungsvoll unterbunden werden, dass zwischen der Verzahnung und einem radial innerhalb ausgebildeten, einteilig mit dem Achsantriebsrad verbundenen Gehäuseansatz mehrere Ausnehmungen auf dem Umfang des Achsantriebsrades verteilt angeordnet sind. Diese Ausnehmungen bilden zwischen sich Stege aus, so dass der Wärmeinhalt, der beim Induktionshärten in das Achsantriebsrad eingebracht wurde, nicht ungehindert ins Differentialgehäuse transportiert werden kann. Darüber hinaus verringern die Ausnehmungen zusätzlich das Gewicht des Bauteils.

Schließlich wird bei einer weiteren bevorzugten Ausgestaltung der vorliegenden Erfindung vorgeschlagen, auf der dem Differentialgehäuse abgewandten Stirnseite des Achsantriebsrades eine ringförmige Ausnehmung konzentrisch zu der Verzahnung auszubilden. Diese Ausnehmung wird vorzugsweise beim Gesenkschmieden des Bauteils ausgeformt und dient der Einspannung der Ausgleichsgetriebeeinheit bei der spanhebenden Bearbeitung in einem Bearbeitungszentrum. Hier werden beispielsweise die Bohrungen zur Aufnahme der Bolzen für die Ausgleichsräder gebohrt, Sitze für die Lager der Ausgleichsgetriebe gedreht und beispielsweise auch die äußere Umfangsfläche des Achsantriebsrades vor dem Fräsen der Verzahnung überdreht.

Zur Lösung des verfahrensmäßigen Problems wird mit einem ersten Aspekt der vorliegenden Erfindung ein Verfahren zur Herstellung einer Ausgleichsgetriebeeinheit vorgeschlagen, bei dem in an sich bekannter Weise ein Achsantriebsrad mit einem Differentialgehäuse zur Aufnahme von Ausgleichszahnrädern einer Differentials als Einheit ausgebildet werden. Im Gegensatz zum Stand der Technik, wo das gesamte Differentialgehäuse mit einem fertig bearbeiteten Achsantriebsrad verbunden werden, wird erfindungsgemäß vorgeschlagen, das Achsantriebsrad und zumindest ein Teil des Differentialgehäuses mittels Umformen eines Rohlings herzustellen.

Bei einem alternativen Lösungsvorschlag wird zur Lösung des obigen Problems mit der vorliegenden Erfindung vorgeschlagen, dass die an dem Achsantriebsrad vorgesehene Verzahnung induktiv gehärtet wird.

Gemäß einer bevorzugten Ausgestaltung wird das Differentialgehäuse zunächst zweiteilig hergestellt, und zwar durch Umformen eines ersten Differentialgehäuseteils zusammen mit dem Achsantriebsrad und durch Umformen eines Gehäusekörperrohlings zu einem zweiten Differentialgehäuseteil. Beide Differentialgehäuseteile werden vorzugsweise stoffschlüssig miteinander verbunden, wobei es insbesondere im Hinblick auf eine Verringerung der Verfahrensschritte zu bevorzugen ist, den Gehäusekörperrohling einerseits und den Achsantriebsradrohling andererseits mittels Gesenkschmieden umzuformen und beide Bauteile zu einem Differentialgehäuse miteinander zu verschweißen.

Im Hinblick auf eine möglichst wirtschaftliche Fertigung insbesondere der Lagersitze an der Ausgleichsgetriebeeinheit ist es zu bevorzugen, das nach dem Fügen des ersten und zweiten Gehäuseteiles hergestellte Bauteil einzuspannen und möglichst viele Arbeitsschritte zur Dreh- und/oder Bohrbearbeitung unter Beibehaltung dieser ersten und einzigen Einspannung vorzunehmen. Zur Einspannung bietet sich insbesondere die an dem Achsantriebsrad vorgesehene ringförmige Ausnehmung an.

In einem nachfolgenden Bearbeitungsschritt wird schließlich das derart hergestellte und dreh- bzw. bohrbearbeitete Bauteil im Bereich der Verzahnung des Achsantriebsrades gehärtet. Diese Verzahnung wird nach der Dreh- bzw. Bohrbearbeitung an dem Achsantriebsrad mittels Fräsen, vorzugsweise mittels nachfolgender Schabbearbeitung ausgebildet und bedarf bei entsprechender Verfahrensführung beim Induktionshärten keiner Nachbearbeitung. Vorzugsweise wird das Induktionshärten zweischrittig durchgeführt, wobei in einem ersten Schritt induktiv eine Kerntemperatur zumindest im Bereich der Verzahnung eingestellt wird. In einem zweiten Schritt wird die Verzahnung dann vorzugsweise mittels Hochfrequenz kurzzeitig erhitzt und unmittelbar nachfolgend abgeschreckt. Das Abschrecken kann sich kurzzeitig mit dem Einbringen der Erwärmung bei dem zweiten Induktionshärteschritt überschneiden. Ziel ist es, ein Härtebild für das Induktivhärten zu erreichen, was dem Härtebild des Einsatzhärtens nahe kommt, und welches eine sinnvolle Symbiose aus verschleißfester Oberfläche sowie zähem Kern ergibt.

Die vorliegende Erfindung wird nachfolgend unter Bezugnahme auf die Zeichnung näher erläutert. In dieser Zeichnung:
- Fig. 1: eine Längsschnittansicht durch ein Ausführungsbeispiel einer Ausgleichsgetriebeeinheit und
- Fig. 2: eine perspektivische Detailansicht der Verbindungsbereiche zwischen dem ersten und dem zweiten Differentialgehäuseteil vor dem Verbinden beider Teile.

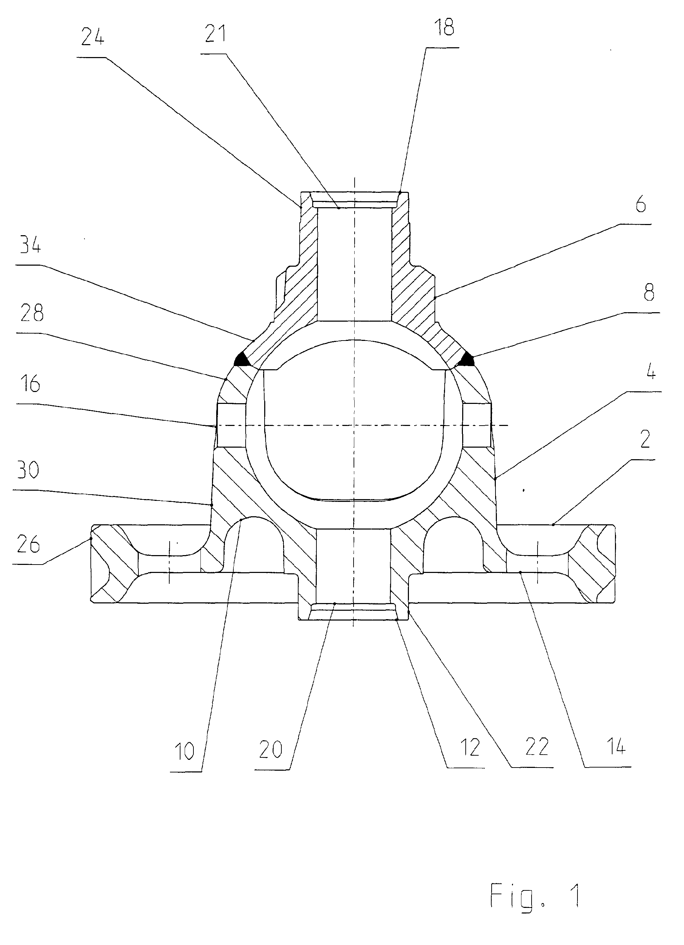

Das in Fig. 1 gezeigte Ausführungsbeispiel einer Ausgleichsgetriebeeinheit weist ein Achsantriebsrad 2 sowie ein daran einteilig ausgebildetes erstes Gehäuseteil 4 auf. Mit dem ersten Gehäuseteil 4 ist ein zweites Gehäuseteil 6 über eine Schweißverbindung 8 verbunden.

Das Achsantriebsrad 2 wird zusammen mit dem ersten Gehäuseteil 4 durch Gesenkschmieden endkonturnah ausgebildet. Beim Gesenkschmieden wird eine ringförmige Ausnehmung 10 sowie ein Lagerzapfen 12 auf der dem ersten Gehäuseteil 4 abgewandten Seite des Achsantriebsrades 2 endkonturnah ausgeformt. Unmittelbar während des Gesenkschmiedeprozesses werden zwischen der Ausnehmung 10 und der äußeren Umfangsfläche des Achsantriebsrades 2 auf dem Umfang verteilt Löcher 14 warm ausgestanzt. Das derart hergestellte Bauteil wird dann mit dem ebenfalls mittels Schmieden hergestellten zweiten Gehäuseteil 6 über die Schweißverbindung 8 in einer noch nachfolgende näher zu erläuternden Weise verbunden.

Die mechanische und die wärmetechnische Bearbeitung erfolgt bei dem gezeigten Ausführungsbeispiel nach dem Fügen der beiden Gehäuseteile, d.h. an dem einteilig ausgebildeten Bauteil. Hierbei werden Bohrungen 16 zur Aufnahme von Bolzen für Ausgleichsräder, vorzugsweise Kegelräder an dem ersten Gehäuseteil 4 ausgebohrt. Auch werden jeweils an dem Lagerzapfen 12 und an einem Endstück 18 des zweiten Gehäuseteiles 6 Wellendurchführungen 20, 21 spanhebend ausgebildet. Weiterhin werden an dem Endstück 18 einerseits sowie dem Lagerzapfen 12 andererseits Lagersitze 22, 24 gebildet.

Unter Beibehaltung der Einspannung des Bauteils über die Ausnehmung 10 können schließlich auch die Innenflächen des Gehäuseteils zur Aufnahme von Ausgleichszahnrädern spanhebend bearbeitet werden. Bei einem Differentialgehäuse mit Kegelrad-Ausgleichszahnrädern wird diese Innenfläche des Gehäuses im Wesentlichen vorzugsweise kugelförmig ausgeformt. Schließlich kann auch die Schweißnaht 8 durch spanhebende Bearbeitung geglättet werden.

Nach dieser spanhebenden Bearbeitung des als Einheit ausgebildeten Bauteiles werden bei dem gezeigten Ausführungsbeispiel an der äußeren Umfangsfläche des Achsantriebsrades 2 Zähne 26 einer Verzahnung gefräst und vorzugsweise nachfolgend geschabt. Die Verzahnung 26 des Achsantriebsrades 2 wird schließlich in einem weiteren Verfahrensschritt vorzugsweise induktiv gehärtet.

Die derart ausgebildete Ausgleichsgetriebeeinheit kann nunmehr mit den Ausgleichsrädern, vorliegend z. B. mit Kegelrad-Ausgleichsrädern bestückt werden. Zuvor kann im Innern des Gehäuses eine Auskleidung aus einem Kunststoffmaterial in an sich bekannter Weise vorgesehen werden, welche einen unmittelbaren Kontakt zwischen dem Gehäuse und den Ausgleichsrädern verhindert.

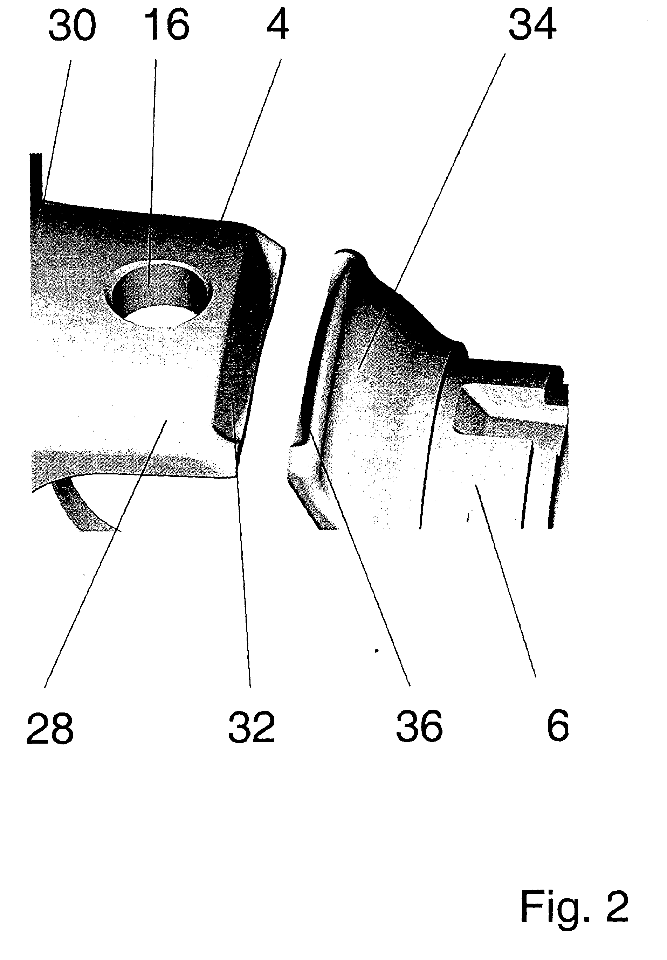

In Fig. 2 wird eine vergrößerte Seitenansicht der endseitigen Teile des ersten und zweiten Gehäuseteils 4; 6 vor dem Fügen der beiden Differentialgehäuse gezeigt. Im unteren Teil der Darstellung von Fig. 2 ist das erste Gehäuseteil 4 mit einem Gehäusesteg 28 zu erkennen. Das gezeigte Ausführungsbeispiel weist an seinem ersten Gehäuseteil 4 zwei sich gegenüberliegende Gehäusestege 28 auf, die in der Draufsicht, d.h. in einer Ansicht rechtwinklig zu der Ebene des Achsantriebsrades, einen ringsegment-förmigen Querschnitt haben. Die innere Fläche des Gehäusesteges 28 ist jeweils spanhebend bearbeitet. Die äußere Kontur des Gehäusesteges 28 wurde durch Gesenkschmieden ausgebildet. Mittig in dem Gehäusesteg 28 ist die Bohrung 16 vorgesehen. Der Gehäusesteg 28 des ersten Gehäuseteils 4 verbreitert sich zu dem Achsantriebsrad 2 hin und geht in einen Gehäuseansatz 30 über. Endseitig weist der Gehäusesteg 28 jeweils die äußere Kontur 32 auf. Diese endseitige Kontur des Gehäusesteges 28 ist mittels Gesenkschmiedens ausgebildet, und zwar vorzugsweise beim Gesenkschmieden des Achsantriebsrades 2 zusammen mit dem ersten Gehäuseteil 4. Korrespondierend zu dieser endseitigen Kontur der Gehäusestege 28 des ersten Gehäuseteils 4 werden Gehäusestege 34 des zweiten Gehäuseteils 6 mit Mulden 36 vorzugsweise mittels Gesenkschmiedens ausgebildet.

Vorzugsweise ist die Endkontur der sich gegenüber liegenden Gehäusestege 28; 34 derart ausgebildet, dass sich beim Fügen der beiden Gehäuseteile 4; 6 eine Vertiefung bildet, die für die Aufnahme der Schweißnaht vorgesehen ist. Durch korrespondierende Gestaltung der Endkonturen der Gehäuseteile 4; 6 und die sich ergebende Vertiefung wird sichergestellt, dass die beim Schweißen entstehende schmelzflüssige Phase nicht in Umfangsrichtung über die Gehäusestege 28; 34 hinausfließen kann.

Es sei darauf hingewiesen, dass alternativ das Achsantriebsrad zusammen mit dem Differentialgehäuse sowie vorzugsweise auch der andere Teil des Differantialgehäuses mittels Urformen hergestellt werden können. Bei diesem Fertigungsverfahren ergeben sich im Wesentlichen ähnliche konstruktive Vereinfachungen, jedoch muss auf eine durch das Schmieden eingebrachte Erhöhung der Festigkeit verzichtet werden, was bei den gegebenen Beanspruchungen der Ausgleichsgetriebeeinheit keinen wesentlichen Nachteil darstellt. Ausgleichsgetriebeeinheiten werden heute regelmäßig mittels Gießen hergestellt, wobei sich aufgrund der Hinterschneidungen das Problem ergibt, mit verlorenen Formen arbeiten zu müssen.

### Bezugszeichenliste

- 2: Achsantriebsrad
- 4: Erstes Gehäuseteil
- 6: Zweites Gehäuseteil
- 8: Schweißverbindung
- 10: Ausnehmung
- 12: Lagerzapfen
- 14: Ausnehmung
- 16: Bohrung
- 18: Endstück
- 20: Wellendurchführung
- 21: Wellendurchführung
- 22: Lagersitz
- 24: Lagersitz
- 26: Zahn
- 28: Gehäusesteg
- 30: Gehäuseansatz
- 32: Mulde
- 34: Gehäusesteg
- 36: Mulde

## Patentansprüche

1. Ausgleichsgetriebeeinheit mit einem Achsantriebsrad (2), das eine Verzahnung (26) aufweist, und einem Differentialgehäuse (2, 4) zur Aufnahme von Ausgleichszahnrädern eines Differentials,
**dadurch gekennzeichnet,**
**dass** das Achsantriebsrad (2) einteilig zumindest mit einem Teil des Differentialgehäuses (4) ausgebildet ist.

2. Ausgleichsgetriebeeinheit mit einem Achsantriebsrad (2), das eine Verzahnung (26) aufweist, und einem Differentialgehäuse (2, 4) zur Aufnahme von Ausgleichszahnrädern eines Differentials, insbesondere nach Anspruch 1, **dadurch gekennzeichnet, dass** das Achsantriebsrad (2) eine induktionsgehärtete Verzahnung (26) aufweist.

3. Ausgleichsgetriebeeinheit nach Anspruch 1, **dadurch gekennzeichnet,**
**dass** der Teil des Differentialgehäuses (4) Bohrungen (16) zur Aufnahme von Ausgleichsrädern aufweist.

4. Ausgleichsgetriebeeinheit nach Anspruch 1 oder 2, **dadurch gekennzeichnet, dass** das Achsantriebsrad (2) und das Teil des Differentialgehäuses (4) mittels Schmieden, insbesondere Gesenkschmieden hergestellt sind.

5. Ausgleichsgetriebeeinheit nach einem der Ansprüche 1 bis 3, **dadurch gekennzeichnet, dass** das Achsantriebsrad und das Teil des Differentialgehäuses mittels Urformen hergestellt sind.

6. Ausgleichsgetriebeeinheit nach einem der vorherigen Ansprüche, **dadurch gekennzeichnet, dass** ein zweites Differentialgehäuseteil (6) vorgesehen ist, welches zur Vervollständigung des die Ausgleichszahnräder aufweisenden Differentialgehäuses mit dem ersten Gehäuseteil (4) verbunden ist.

7. Ausgleichsgetriebeeinheit nach einem der vorherigen Ansprüche, **dadurch gekennzeichnet, dass** das erste und das zweite Differentialgehäuseteil (4; 6) über eine Schweißverbindung (8) miteinander verbunden sind.

8. Ausgleichgetriebevorrichtung nach einem der vorherigen Ansprüche, **dadurch gekennzeichnet, dass** das Achsantriebsrad (2) und das erste Differentialgehäuse (4) aus einem induktiv härtbaren Stahl und das zweite Differentialgehäuse (6) aus einem schweißbaren Stahl hergestellt sind.

9. Ausgleichsgetriebeeinheit nach einem der vorherigen Ansprüche, **dadurch gekennzeichnet, dass** das erste Differentialgehäuse (4) zumindest zwei sich im Wesentlichen axial zu dem Achsantriebsrad (2) erstreckende Gehäusestege (28) aufweist, die mit dazu korrespondierend ausgebildeten Gehäusestegen (36 ) des zweiten Differentialgehäuseteils (6) verschweißt sind.

10. Ausgleichsgetriebeeinheit nach einem der vorherigen Ansprüche, **dadurch gekennzeichnet, dass** die an dem ersten oder dem zweiten Differentialgehäuseteil (4; 6) ausgebildeten Gehäusestege (28; 36) endseitig am Umfang Vertiefungen (32) aufweisen und dass die Gehäusestege des jeweils anderen Differentialgehäuseteils (36; 28) hierzu korrespondierend ausgebildet sind.

11. Ausgleichsgetriebeeinheit nach Anspruch 9 oder 10, **dadurch gekennzeichnet, dass** die endseitige Kontur der Gehäusestege (28; 36) mittels Gesenkschmieden hergestellt ist.

12. Ausgleichsgetriebeeinheit nach einem der vorherigen Ansprüche, **dadurch gekennzeichnet, dass** die an dem Achsantriebsrad (2) ausgebildete Verzahnung (26) induktionsgehärtet ist.

13. Ausgleichsgetriebeeinheit nach einem der vorherigen Ansprüche, **dadurch gekennzeichnet, dass** zwischen der Verzahnung (26) und einem radial innerhalb ausgebildeten, einteilig mit dem Achsantriebsrad (2) verbundenen Gehäuseansatz (30) mehrere Ausnehmungen (14) auf dem Umfang des Achsantriebsrades (2) verteilt angeordnet sind.

14. Ausgleichsgetriebeeinheit nach einem der vorherigen Ansprüche, **dadurch gekennzeichnet, dass** auf der dem Differentialgehäuse (4, 6) abgewandten Stirnseite des Achsantriebsrades (2) eine ringförmige Ausnehmung (10) konzentrisch zu der Verzahnung (26) ausgebildet ist.

15. Verfahren zur Herstellung einer Ausgleichsgetriebeeinheit, insbesondere nach einem der vorherigen Ansprüche, bei dem ein Achsantriebsrad mit einem Differentialgehäuse zur Aufnahme von Ausgleichszahnrädern eines Differentials als Einheit ausgebildet wird,
**dadurch gekennzeichnet,**
**dass** das Achsantriebsrad und zumindest ein Teil des Differentialgehäuses mittels Umformen eines Achsantriebsradrohlings hergestellt werden.

16. Verfahren zur Herstellung einer Ausgleichsgetriebeeinheit, insbesondere nach einem der vorherigen Ansprüche, bei dem ein eine Verzahnung aufweisendes Achsantriebsrad mit einem Differantialgehäuse zur Aufnahme von Ausgleichzahnrädern eines Differantials als Einheit ausgebildet und die Verzahnung des Achsantriebsrades gehärtet wird,
**dadurch gekennzeichnet,**
**dass** die Verzahnung induktiv gehärtet wird.

17. Verfahren nach Anspruch 15 oder 16, **dadurch gekennzeichnet, dass** eine zweites Differentialgehäuseteil durch Umformen eines Gehäusekörperrohlings hergestellt und das derart hergestellte zweite Differentialgehäuseteil stoffschlüssig mit dem ersten Differentialgehäuseteil verbunden wird.

18. Verfahren nach einem der Ansprüche 15 bis 17, **dadurch gekennzeichnet, dass** das erste Differentialgehäuseteil zusammen mit dem Achsantriebsrad sowie das zweite Differentialgehäuseteil jeweils gesenkgeschmiedet werden.

19. Verfahren nach einem der Ansprüche 15 bis 18, **dadurch gekennzeichnet, dass** an dem ersten und zweiten Differentialgehäuseteil Verbindungsflächen gesenkgeschmiedet werden und dass die Verbindungsflächen miteinander verschweißt werden.

20. Verfahren nach einem der Ansprüche 15 bis 19, **dadurch gekennzeichnet, dass** ein nach Verbinden der ersten und zweiten Differentialgehäuseteile hergestelltes Bauteil eingespannt wird und dass nachfolgend die spanhebende Bearbeitung durchgeführt wird

21. Verfahren nach einem der Ansprüche 15 bis 20, **dadurch gekennzeichnet, dass** im Anschluss an die Dreh- und/oder Bohrbearbeitung an der Umfangsfläche des Achsantriebsrades eine Verzahnung ausgebildet und dass die Verzahnung gehärtet wird.

22. Verfahren nach Anspruch 21, **dadurch gekennzeichnet, dass** die Verzahnung induktiv gehärtet wird.

23. Verfahren nach Anspruch 21 oder 22, **dadurch gekennzeichnet, dass** die Verzahnung in einem Zweischritt-Induktionshärteverfahren gehärtet wird, wobei in dem ersten Schritt das Achsantriebsrad zumindest im Bereich der Verzahnung auf eine Kerntemperatur erwärmt wird und dass nachfolgend in einem zweiten Schritt die Verzahnung kurzzeitig erhitzt und unmittelbar nachfolgend abgeschreckt wird.
